# EUROPÄISCHE PATENTSCHRIFT

(11) **EP 3 705 850 B1**
(45) Veröffentlichungstag und Bekanntmachung des Hinweises auf die Patenterteilung: **29.12.2021**
(21) Anmeldenummer: 19160940.3
(22) Anmeldetag: 06.03.2019
(51) Int. Cl.: G01D 5/244, G01D 5/347

(54) **ANORDNUNG MIT EINEM HAUPTTRÄGER, EINEM AUF DEM HAUPTTRÄGER ANGEORDNETEN ZWISCHENTRÄGER UND EINEM AUF DEM ZWISCHENTRÄGER ANGEORDNETEN MASSSTAB**
ASSEMBLY WITH A MAIN BEAM, AN INTERMEDIATE SUPPORT ARRANGED ON THE MAIN BEAM AND A MEASURING ROD ON THE INTERMEDIATE SUPPORT
DISPOSITIF DOTÉ D'UN SUPPORT PRINCIPAL, D'UN SUPPORT INTERMÉDIAIRE AGENCÉ SUR LE SUPPORT PRINCIPAL ET D'UNE CALE AGENCÉ SUR LE SUPPORT INTERMÉDIAIRE

(43) Veröffentlichungstag der Anmeldung: 09.09.2020
(73) Patentinhaber: ETEL S.A., 2112 Môtiers (CH)
(72) Erfinder: TAMIGNIAUX, Philippe, 25500 Morteau (FR); ZANONI, Pierre-André, 1400 Yverdon-Les-Bains (CH); STONE, Dennis, 2000 Neuchatel (CH); GALDOS, Gorka, 2018 Couvet (CH)
(74) Vertreter: Pleyer, Hans Anno

(56) Entgegenhaltungen:
- EP-A1- 3 026 389
- EP-A1- 3 078 940
- DE-A1- 4 212 970
- DE-A1- 19 512 892
- DE-A1-102005 027 025
- DE-A1-102009 044 917

## Beschreibung

### GEBIET DER TECHNIK

Die vorliegende Erfindung betrifft eine Anordnung mit einem Hauptträger, einem auf dem Hauptträger angeordneten Zwischenträger und einem auf dem Zwischenträger angeordneten Maßstab nach dem Oberbegriff des Anspruchs 1.

### STAND DER TECHNIK

Derartige Positionsmesseinrichtungen werden insbesondere in Bearbeitungsmaschinen zur Messung der Relativlage eines Werkzeugs bezüglich eines zu bearbeitenden Werkstücks, in Koordinatenmessmaschinen zur Ermittlung von Lage und Abmessungen von Prüfobjekten sowie auch in der Halbleiterindustrie eingesetzt. Dabei wird der Maßstab an einem Träger, z.B. an der Antriebseinheit (z.B. Linearmotor) direkt angebaut oder der Maßstab an einem durch die Antriebseinheit angetriebenen Bauteil angebaut. Stationär gegenüber dem bewegten Maßstab ist eine Abtasteinheit der Positionsmesseinrichtung an einem zweiten Objekt angeordnet, dessen Relativposition gegenüber dem Träger gemessen werden soll.

Die Anforderungen an Positionsmesseinrichtungen werden immer höher. Es wird laufend eine höhere Auflösung sowie eine höhere Genauigkeit und Reproduzierbarkeit der Positionsmessung gefordert. Zur Bildung eines Fixpunktes des Maßstabs gegenüber dem Träger ist es bekannt, diesen an einer Stelle am Träger in Messrichtung ortsfest zu fixieren.

In den meisten Fällen bestehen der Maßstab und der Träger aus Materialien mit unterschiedlichen thermischen Ausdehnungsverhalten. Die ortsfeste Fixierung ist derart auszugestalten, dass bei Temperaturänderungen keine Zwangskräfte vom Träger auf den Maßstab ausgeübt werden.

Eine gattungsgemäße Positionsmesseinrichtung ist aus DE 195 12 892 A1 bekannt. Bei dieser Positionsmesseinrichtung wird ein Maßstab aus einem Trägerkörper und einer Maßverkörperung gebildet. Die Maßverkörperung ist dabei über zwei voneinander beabstandete Auflager mit dem Trägerkörper verbunden. Eines der Auflager bildet einen Fixierungspunkt für die Befestigung der Maßverkörperung am Trägerkörper. Das zweite Auflager bildet einen elastischen Befestigungspunkt, sodass ausgehend vom fixierenden Auflager eine thermisch bedingte Längsverschieblichkeit der Maßverkörperung gegenüber dem Trägerkörper möglich ist.

Längenmesseinrichtungen mit einem oder mehreren Befestigungselementen zur Fixierung eines Maßstabs bzw. Trägerkörpers sind in EP 3 026 389 A1, DE 42 12 970 A1, EP 3 078 940 A1 und DE 10 2009 044917 A1 offenbart. Eine Halterung für einen Maßstab mit mehreren entlang des Maßstabs angeordneten Befestigungselementen ist in DE 10 2005 027025 A1 offenbart.

### ZUSAMMENFASSUNG DER ERFINDUNG

Der vorliegenden Erfindung liegt die Aufgabe zugrunde, eine Anordnung mit einem Hauptträger, einem auf dem Hauptträger angeordneten Zwischenträger und einem auf dem Zwischenträger angeordneten Maßstab anzugeben, die kompakt aufgebaut ist und mit der eine präzise Positionsmessung ermöglicht wird.

Diese Aufgabe wird erfindungsgemäß durch eine Anordnung mit den Merkmalen des Anspruchs 1 gelöst.

Die erfindungsgemäß ausgebildete Anordnung umfasst einen Hauptträger, einen auf dem Hauptträger angeordneten Zwischenträger und einen auf dem Zwischenträger angeordneten Maßstab. Der Maßstab erstreckt sich in einer Längsrichtung. Der Maßstab weist eine in einer Messteilungsebene angeordnete Messteilung zur Positionsmessung zumindest in Längsrichtung auf. Der Hauptträger weist ein erstes Befestigungselement und ein zweites Befestigungselement auf. Das erste Befestigungselement und das zweite Befestigungselement sind in den Hauptträger integriert. Das erste Befestigungselement und das zweite Befestigungselement sind in Längsrichtung voneinander beabstandet angeordnet. Das erste Befestigungselement ist derart ausgebildet, dass es den Zwischenträger an einer ersten Position in Längsrichtung starr an dem Hauptträger trägt. Das zweite Befestigungselement ist derart ausgebildet, dass es den Zwischenträger an einer von der ersten Position verschiedenen zweiten Position in Längsrichtung frei beweglich gegenüber dem Hauptträger trägt. Die Anordnung weist ein drittes Befestigungselement und ein viertes Befestigungselement auf. Das dritte Befestigungselement und das vierte Befestigungselement sind in Längsrichtung voneinander beabstandet angeordnet. Das dritte Befestigungselement ist derart ausgebildet, dass es den Maßstab an der ersten Position in Längsrichtung starr an dem Zwischenträger trägt. Das vierte Befestigungselement ist derart ausgebildet, dass es den Maßstab an einer von der ersten Position und der zweiten Position verschiedenen dritten Position in Längsrichtung frei beweglich gegenüber dem Zwischenträger trägt.

Vorzugsweise sind die erste Position, die zweite Position und die dritte Position jeweils voneinander verschiedene Längspositionen.

Das erste Befestigungselement ist derart ausgebildet, dass es den Zwischenträger an der ersten Position um eine der ersten Position zugeordnete Drehachse, die senkrecht zur Messteilungsebene verläuft, frei drehbar gegenüber dem Hauptträger trägt, und das zweite Befestigungselement ist derart ausgebildet, dass es den Zwischenträger an der zweiten Position um eine der zweiten Position zugeordnete Drehachse, die senkrecht zur Messteilungsebene verläuft, frei drehbar gegenüber dem Hauptträger trägt.

Es ist weiterhin vorteilhaft, wenn der Hauptträger mehrere weitere Befestigungselemente aufweist, wenn die weiteren Befestigungselemente in den Hauptträger integriert sind, und wenn die weiteren Befestigungselemente in Längsrichtung verteilt zwischen dem ersten Befestigungselement und dem zweiten Befestigungselement angeordnet und derart ausgebildet sind, dass sie den Zwischenträger an mehreren von der ersten Position und der zweiten Position verschiedenen weiteren Positionen in Längsrichtung und in einer Querrichtung, die senkrecht zur Längsrichtung verläuft, frei beweglich gegenüber dem Hauptträger tragen.

Vorzugsweise sind die weiteren Befestigungselemente derart ausgebildet, dass sie den Zwischenträger an den weiteren Positionen um den weiteren Positionen zugeordnete Drehachsen, die jeweils senkrecht zur Messteilungsebene verlaufen, frei drehbar gegenüber dem Hauptträger tragen.

Durch die Erfindung werden mit einer kompakt aufgebauten Anordnung zum einen eine (lokale) ortsfeste Fixierung des Maßstabs gegenüber dem Hauptträger und zum anderen eine zweifache Entkopplung des Maßstabs vom Hauptträger ermöglicht. Hierzu sind eine Entkopplung zwischen dem Hauptträger und dem Zwischenträger und eine weitere Entkopplung zwischen dem Zwischenträger und dem Maßstab vorgesehen. Die Entkopplungen erfolgen dabei jeweils in zumindest einem Translationsfreiheitsgrad, d.h. zumindest in Längsrichtung (Messrichtung). Durch die zweifache Entkopplung wird erreicht, dass auch bei Temperaturänderungen keine Zwangskräfte vom Hauptträger auf den Maßstab ausgeübt werden. Der Zwischenträger dient zudem als thermisches Isolationselement, wodurch eine direkte Wärmeübertragung vom Hauptträger auf den Maßstab vermieden wird. Auch kann der Zwischenträger bei einer Zerstörung oder Beschädigung des Maßstabs einfach ausgetauscht werden.

Vorteilhafte Ausbildungen der Erfindung entnimmt man den abhängigen Ansprüchen.

### KURZE BESCHREIBUNG DER ZEICHNUNGEN

Einzelheiten und Vorteile der erfindungsgemäßen Anordnung ergeben sich aus der nachfolgenden Beschreibung eines Ausführungsbeispiels anhand der beiliegenden Figuren.

Es zeigen
- Fig. 1: eine perspektivische Ansicht einer erfindungsgemäß ausgebildeten Anordnung mit einem Hauptträger, einem auf dem Hauptträger angeordneten Zwischenträger und einem auf dem Zwischenträger angeordneten Maßstab;
- Fig. 2: eine Draufsicht auf die Anordnung nach Fig. 1;
- Fig. 3: eine perspektivische Ansicht des Hauptträgers mit einem in den Hauptträger integrierten ersten Befestigungselement und einem in den Hauptträger integrierten zweiten Befestigungselement;
- Fig. 4: eine perspektivische Ansicht des Zwischenträgers;
- Fig. 5: eine Draufsicht auf den Maßstab, der von einem dritten Befestigungselement und einem vierten Befestigungselement an einander gegenüberliegenden Seitenflächen kontaktierbar ist;
- Fig. 6: eine perspektivische Ansicht des ersten Befestigungselements;
- Fig. 7: eine perspektivische Ansicht des zweiten Befestigungselements;
- Fig. 8: eine perspektivische Ansicht des dritten Befestigungselements;
- Fig. 9: eine perspektivische Ansicht des vierten Befestigungselements;
- Fig. 10: eine perspektivische Ansicht eines von weiteren in den Hauptträger integrierten Befestigungselementen; und
- Fig. 11: eine Draufsicht auf eine Messanordnung zur Messung einer Position des Fixpunktes des Maßstabs gegenüber einem ortsfesten Referenzteil, die die Anordnung nach Fig. 1 umfasst.

### BESCHREIBUNG DER AUSFÜHRUNGSFORMEN

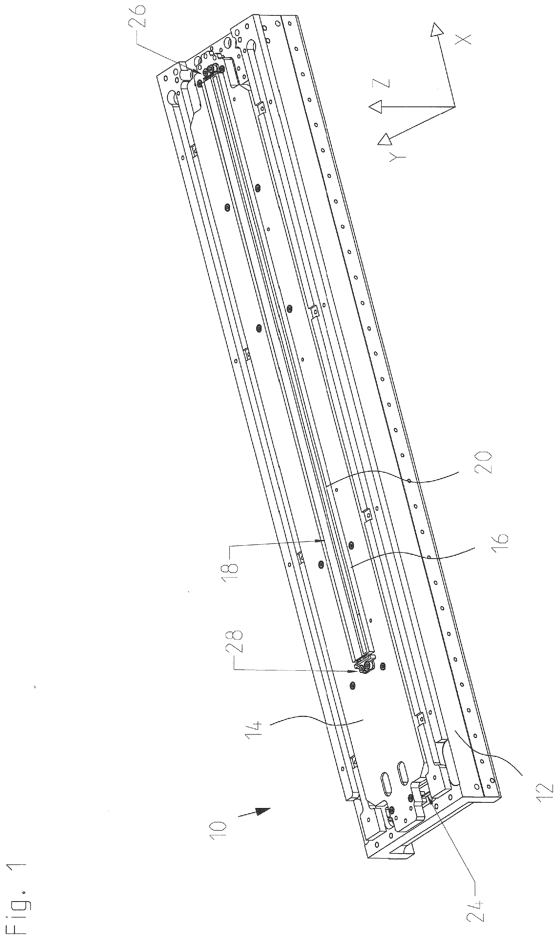

Eine Ausführungsform der Erfindung wird nachfolgend anhand der Figuren 1 bis 10 erläutert. Die erfindungsgemäß ausgebildete Anordnung 10 umfasst einen Hauptträger 12, einen auf dem Hauptträger 12 angeordneten Zwischenträger 14 und einen auf dem Zwischenträger 14 angeordneten Maßstab 16. Der Maßstab 16 erstreckt sich in einer Längsrichtung X und weist eine in einer Messteilungsebene 20 angeordnete Messteilung 18 auf. Die Messteilung 18 ist als lichtelektrisch abtastbare Inkrementalteilung zur hochgenauen Positionsmessung in Längsrichtung X sowie zusätzlich in eine zweite senkrecht dazu verlaufende Querrichtung Y ausgebildet. Der Maßstab 16 besteht vorzugsweise aus einem Material mit vernachlässigbar kleinem thermischen Ausdehnungskoeffizienten, insbesondere mit einem thermischen Ausdehnungskoeffizienten α im Temperaturbereich von 0° bis 50° kleiner als 1,5 x 10⁻⁶K⁻¹, insbesondere aber kleiner als 0,1 x 10⁻¹K⁻¹. Derartige Materialien sind Glas bzw. Glaskeramik (z.B. ZERODUR) oder Metalle wie z.B. Invar.

Der Hauptträger 12 und der Zwischenträger 14 bestehen vorzugsweise aus Stahl mit einem thermischen Ausdehnungskoeffizienten von etwa 10,5 x 10⁻⁶K⁻¹.

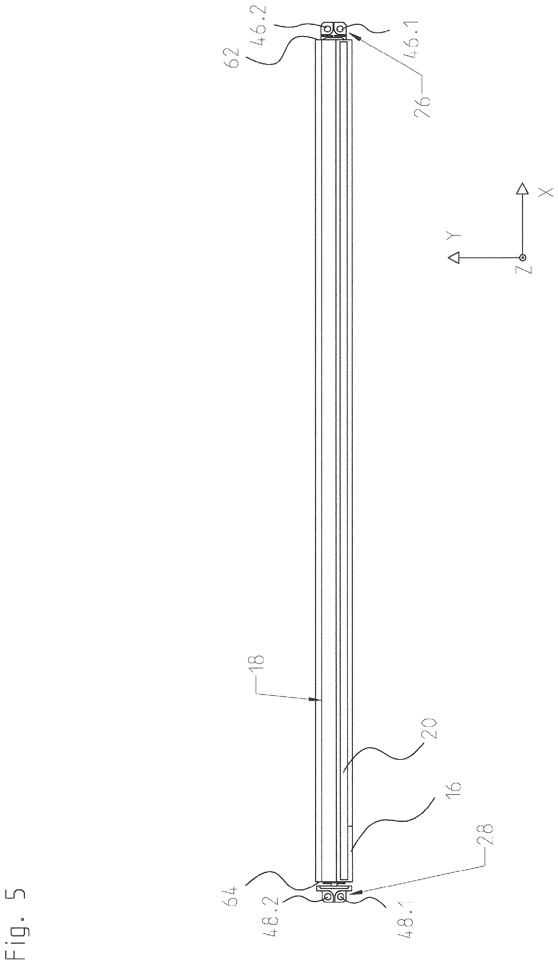

Der Hauptträger 12 und der Zwischenträger 14 sind jeweils als plattenförmige Struktur ausgebildet. Der Maßstab 16 weist einen rechteckförmigen Querschnitt mit zwei einander gegenüberliegenden Seitenflächen 62, 64, die jeweils quer zur Längsrichtung X verlaufen, auf (vgl. Fig. 5).

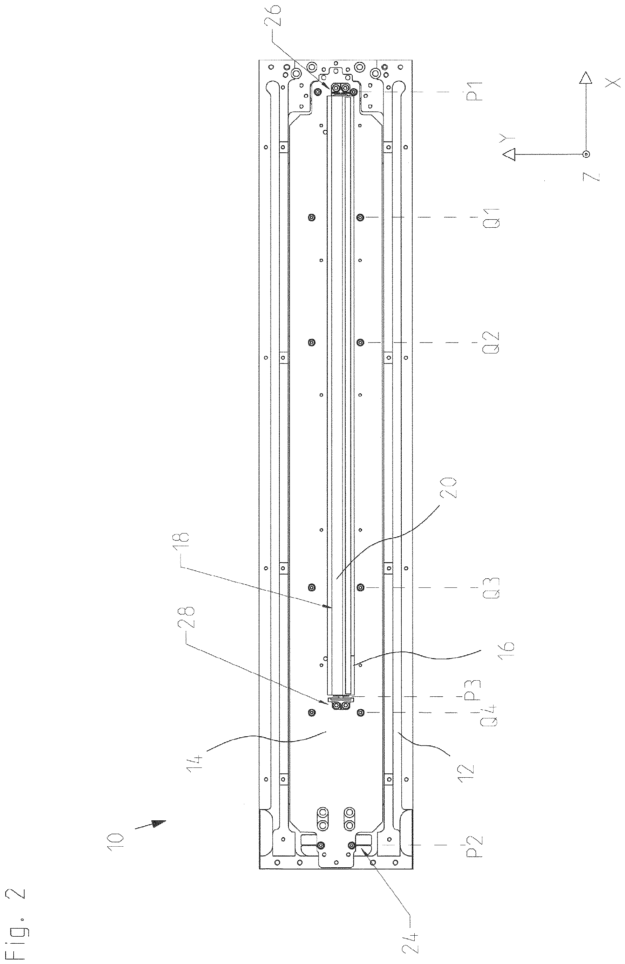

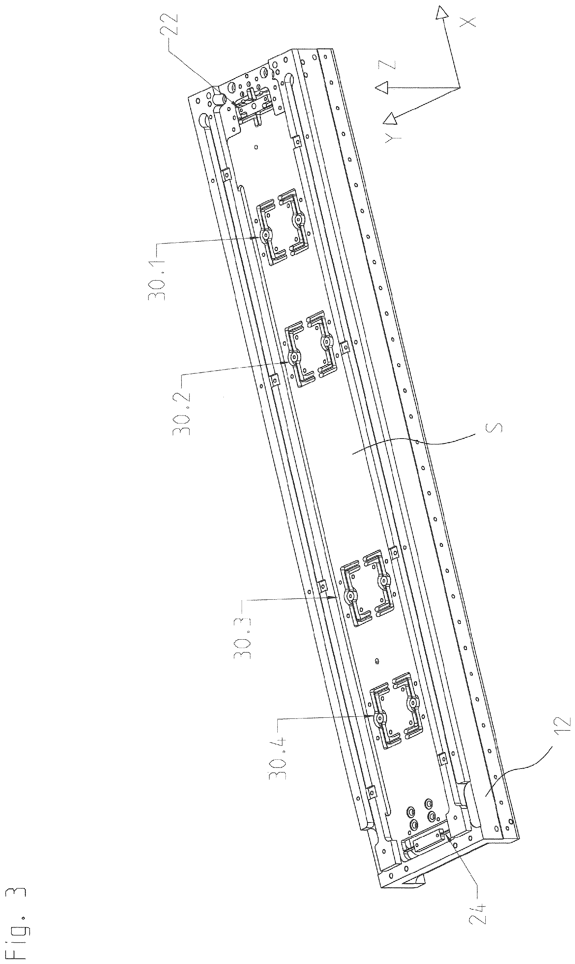

Der dreiteilige Aufbau bestehend aus dem Hauptträger 12, dem Zwischenträger 14 und dem Maßstab 16 ist in den Figuren 1 und 2 dargestellt. Die einzelnen Komponenten, d.h. der Hauptträger 12, der Zwischenträger 14 und der Maßstab 16, sind in den Figuren 3 bis 5 dargestellt.

Wie in Fig. 3 gezeigt, weist der Hauptträger 12 ein in den Hauptträger 12 integriertes erstes Befestigungselement 22 und ein in den Hauptträger 12 integriertes zweites Befestigungselement 24 auf. Das erste Befestigungselement 22 und das zweite Befestigungselement 24 sind in Längsrichtung X voneinander beabstandet angeordnet. Ferner ist in Fig. 1 gezeigt, dass die Anordnung 10 ein drittes Befestigungselement 26 und ein viertes Befestigungselement 28 aufweist. Das dritte Befestigungselement 26 und das vierte Befestigungselement 28 sind in Längsrichtung X voneinander beabstandet angeordnet. Bezugnehmend auf Fig. 1 und 5 sind das dritte Befestigungselement 26 und das vierte Befestigungselement 28 auf dem Zwischenträger 14 angeordnet und derart ausgebildet, dass sie den Maßstab 16 an den einander gegenüberliegenden Seitenflächen 62, 64 kontaktieren.

Das erste bis vierte Befestigungselement 22 bis 28 dienen einerseits zur (lokalen) ortsfesten Fixierung des Maßstabs 16 gegenüber dem Hauptträger 12 und andererseits zur zweifachen Entkopplung des Maßstabs 16 vom Hauptträger 12, jeweils zumindest in einem Translationsfreiheitsgrad, d.h. in Längsrichtung X (Messrichtung). Hierzu ist das erste Befestigungselement 22 derart ausgebildet, dass es den Zwischenträger 14 an einer ersten Position P1 in Längsrichtung X starr an dem Hauptträger 12 trägt. Das zweite Befestigungselement 24 ist derart ausgebildet, dass es den Zwischenträger 14 an einer von der ersten Position P1 verschiedenen zweiten Position P2 in Längsrichtung X frei beweglich gegenüber dem Hauptträger 12 trägt. Das dritte Befestigungselement 26 ist derart ausgebildet, dass es den Maßstab 16 an der ersten Position P1 in Längsrichtung X starr an dem Zwischenträger 14 trägt. Das vierte Befestigungselement 28 ist derart ausgebildet, dass es den Maßstab 16 an einer von der ersten Position P1 und der zweiten Position P2 verschiedenen dritten Position P3 in Längsrichtung X frei beweglich gegenüber dem Zwischenträger 14 trägt. Die erste bis dritte Position P1 bis P3 sind vorzugsweise jeweils voneinander verschiedene Längspositionen, d.h. Positionen entlang der Längsrichtung X, wie es in Fig. 2 veranschaulicht ist.

In Bezug auf Fig. 3 weist der Hauptträger 12 zusätzlich zu dem ersten und zweiten Befestigungselement 22, 24 (d.h. die an einander gegenüberliegenden Enden des Hauptträgers 12 angeordneten Befestigungselemente) mehrere weitere in den Hauptträger 12 integrierte Befestigungselemente 30.1 bis 30.4 auf. Wie in Fig. 3 gezeigt, sind die weiteren Befestigungselemente 30.1 bis 30.4 in Längsrichtung X verteilt zwischen dem ersten Befestigungselement 22 und dem zweiten Befestigungselement 24 angeordnet. Sie dienen insbesondere dazu, den Zwischenträger 14 an mehreren von der ersten Position P1 und der zweiten Position P2 verschiedenen weiteren Positionen Q1 bis Q4 in Längsrichtung X und in einer Querrichtung Y, die senkrecht zur Längsrichtung X (d.h. parallel zur Messteilungsebene 20) verläuft, frei beweglich gegenüber dem Hauptträger 12 zu tragen. Die weiteren Positionen Q1 bis Q4 sind vorzugsweise jeweils voneinander verschiedene Längspositionen, d.h. Positionen entlang der Längsrichtung X, die zwischen der ersten und zweiten Position P1, P2 liegen. Dies ist wiederum in Fig. 2 veranschaulicht.

In vorteilhafter Weise können die Befestigungselemente 22, 24 sowie 30.1 bis 30.4 durch ein Drahterodierverfahren hergestellt werden. Es können auch andere allgemein bekannte Bearbeitungsverfahren zur Herstellung derselben verwendet werden. Die Befestigungselemente 22, 24 sowie 30.1 bis 30.4 sind, wie in Fig. 3 zu erkennen, durch Ausnehmungen in der Oberfläche S des Hauptträgers 12 gebildet.

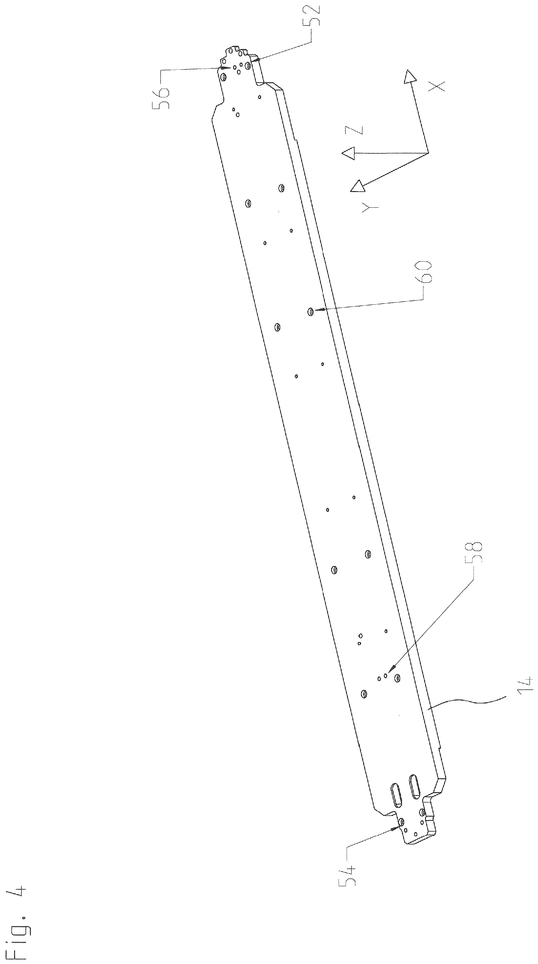

Der in Fig. 4 gezeigte Zwischenträger 14 weist mehrere Paare von Ausnehmungen 52 bis 60 zur Aufnahme von Befestigungsschrauben auf. Dadurch kann der Zwischenträger 14 einerseits an dem Hauptträger 12 befestigt werden, und andererseits kann der Maßstab 16 über das dritte und vierte Befestigungselement 26, 28 an dem Zwischenträger 14 befestigt werden. Hierzu weisen das dritte und vierte Befestigungselement 26, 28, wie in Fig. 5 gezeigt, den Paaren von Ausnehmungen 56, 58 jeweils zugeordnete Paare von Ausnehmungen 46.1, 46.2; 48.1, 48.2 zur Aufnahme von Befestigungsschrauben auf.

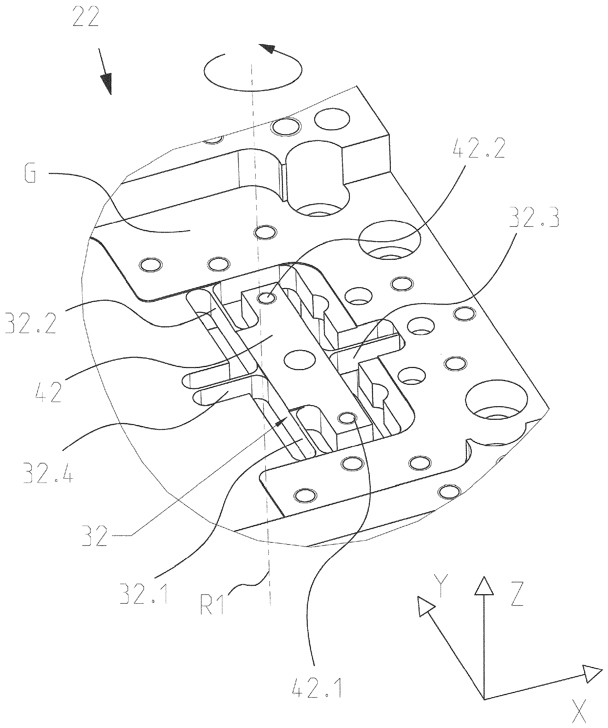

In den Figuren 6 bis 10 sind das erste bis vierte Befestigungselement 22 bis 28 und eines der weiteren Befestigungselemente 30.1 bis 30.4 (im Folgenden weiteres Befestigungselement 30) vergrößert dargestellt. Die Darstellungen von Fig. 6 bis 10 dienen zur Veranschaulichung der Funktionsweise der jeweils als Festkörpergelenke ausgebildeten Befestigungselemente 22 bis 28, 30.

Fig. 6 zeigt eine perspektivische Ansicht des ersten Befestigungselements 22. Das erste Befestigungselement 22 weist vier Blattfedern 32.1 bis 32.4 auf. Die Blattfedern 32.1 bis 32.4 bilden ein Festkörpergelenk 32. Wie in Fig. 6 gezeigt, erstrecken sich die Blattfedern 32.1 bis 32.4 jeweils vom Grundkörper G des Hauptträgers 12 zu einem Befestigungsabschnitt 42 des ersten Befestigungselements 22. Die beiden Blattfedern 32.1, 32.2 erstrecken sich dabei in Querrichtung Y, während sich die beiden Blattfedern 32.3, 32.4 in Längsrichtung X erstrecken. Ferner erstreckt sich jede Blattfeder 32.1 bis 32.4 in einer Höhenrichtung Z, die senkrecht zur Messteilungsebene 20 verläuft.

Der Befestigungsabschnitt 42 des ersten Befestigungselements 22 umfasst ein Paar von Ausnehmungen 42.1, 42.2 zur Aufnahme von Befestigungsschrauben, die den Ausnehmungen 52 des Zwischenträgers 14 zugeordnet sind. Dadurch kann der Zwischenträger 14 an dem ersten Befestigungselement 22 befestigt werden.

In Bezug auf Fig. 2 und 6 ist das erste Befestigungselement 22 derart ausgebildet, dass es den Zwischenträger 14 an der ersten Position P1 um eine der ersten Position P1 zugeordnete Drehachse R1, die senkrecht zur Messteilungsebene 20 verläuft, frei drehbar gegenüber dem Hauptträger 12 trägt. Ferner ist das erste Befestigungselement 22 derart ausgebildet, dass es den Zwischenträger 14 an der ersten Position P1 in Querrichtung Y und in Höhenrichtung Z starr an dem Hauptträger 12 trägt.

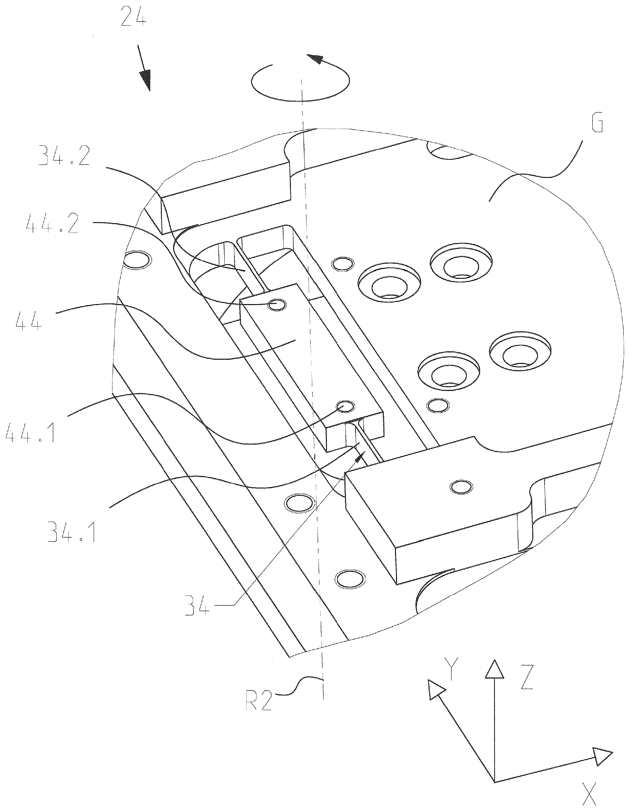

Figur 7 zeigt eine perspektivische Ansicht des zweiten Befestigungselements 24. Das zweite Befestigungselement 24 weist zwei Blattfedern 34.1, 34.2 auf. Die Blattfedern 34.1, 34.2 bilden ein Festkörpergelenk 34. Wie in Fig. 7 gezeigt, erstrecken sich die Blattfedern 34.1, 34.2 jeweils vom Grundkörper G des Hauptträgers 12 zu einem Befestigungsabschnitt 44 des zweiten Befestigungselements 24. Die beiden Blattfedern 34.1, 34.2 erstrecken sich dabei jeweils in Querrichtung Y. Ferner erstreckt sich jede Blattfeder 34.1, 34.2 in Höhenrichtung Z.

Der Befestigungsabschnitt 44 des zweiten Befestigungselements 24 umfasst ein Paar von Ausnehmungen 44.1, 44.2 zur Aufnahme von Befestigungsschrauben, die den Ausnehmungen 54 des Zwischenträgers 14 zugeordnet sind. Dadurch kann der Zwischenträger 14 an dem zweiten Befestigungselement 24 befestigt werden.

In Bezug auf Fig. 2 und 7 ist das zweite Befestigungselement 24 derart ausgebildet, dass es den Zwischenträger 14 an der zweiten Position P2 um eine der zweiten Position P2 zugeordnete Drehachse R2, die senkrecht zur Messteilungsebene 20 verläuft, frei drehbar gegenüber dem Hauptträger 12 trägt. Ferner ist das zweite Befestigungselement 24 derart ausgebildet, dass es den Zwischenträger 14 an der zweiten Position P2 in Querrichtung Y und in Höhenrichtung Z starr an dem Hauptträger 12 trägt.

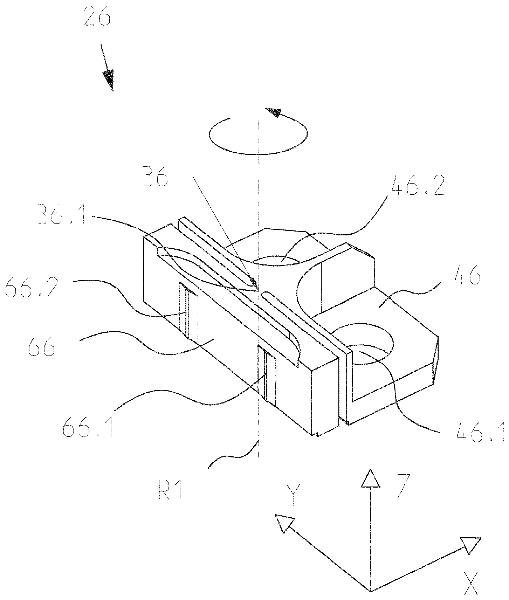

Fig. 8 zeigt eine perspektivische Ansicht des dritten Befestigungselements 26. Das dritte Befestigungselement 26 umfasst einen stegförmigen Abschnitt 36.1, der sich in Höhenrichtung Z erstreckt. Der stegförmige Abschnitt 36.1 bildet ein Festkörpergelenk 36. Das dritte Befestigungselement 26 umfasst einen ersten Befestigungsabschnitt 46 zur Befestigung am Zwischenträger 14 und einen zweiten Befestigungsabschnitt 66 zur seitlichen Kontaktierung des Maßstabs 16. Der erste Befestigungsabschnitt 46 umfasst die Ausnehmungen 46.1, 46.2. Die Ausnehmungen 46.1, 46.2 sind für Befestigungsschrauben in den Ausnehmungen 56 vorgesehen. Der zweite Befestigungsabschnitt 66 umfasst zwei Vorsprünge 66.1, 66.2, die sich in Höhenrichtung Z erstrecken. Die Vorsprünge 66.1, 66.2 dienen zur sicheren und präzisen Kontaktierung der Seitenfläche 62 des Maßstabs 16. Durch die Vorsprünge 66.1, 66.2 wird ein Klebespalt vorgegeben, in den in Querrichtung Y betrachtet jeweils beidseitig der Vorsprünge 66.1, 66.2 ein Klebstoff eingebracht ist. Dadurch wird der Maßstab 16 an dem dritten Befestigungselement 26 befestigt.

In Bezug auf Fig. 2 und 8 ist das dritte Befestigungselement 26 derart ausgebildet, dass es den Maßstab 16 an der ersten Position P1 um die der ersten Position P1 zugeordnete Drehachse R1 frei drehbar gegenüber dem Zwischenträger 14 trägt. Ferner ist das dritte Befestigungselement 26 derart ausgebildet, dass es den Maßstab 16 an der ersten Position P1 in Querrichtung Y und in Höhenrichtung Z starr an dem Zwischenträger 14 trägt.

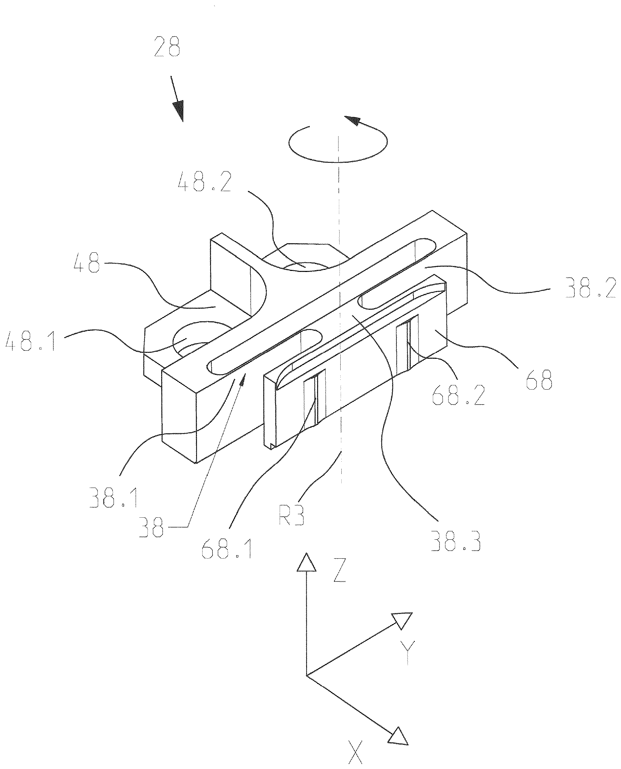

Fig. 9 zeigt eine perspektivische Ansicht des vierten Befestigungselements 28. Das vierte Befestigungselement 28 umfasst zwei Streben 38.1, 38.2 sowie einen verjüngten Abschnitt 38.3. Die Streben 38.1, 38.2 bilden zusammen mit dem verjüngten Abschnitt 38.3 ein Festkörpergelenk 38. Das vierte Befestigungselement 28 umfasst einen ersten Befestigungsabschnitt 48 zur Befestigung am Zwischenträger 14 und einen zweiten Befestigungsabschnitt 68 zur seitlichen Kontaktierung des Maßstabs 16. Der erste Befestigungsabschnitt 48 umfasst die Ausnehmungen 48.1, 48.2. Die Ausnehmungen 48.1, 48.2 sind für Befestigungsschrauben in den Ausnehmungen 58 vorgesehen. Der zweite Befestigungsabschnitt 68 umfasst zwei Vorsprünge 68.1, 68.2, die sich in Höhenrichtung Z erstrecken. Die Vorsprünge 68.1, 68.2 dienen zur sicheren und präzisen Kontaktierung der Seitenfläche 64 des Maßstabs 16. Durch die Vorsprünge 68.1, 68.2 wird ein Klebespalt vorgegeben, in den in Querrichtung Y betrachtet jeweils beidseitig der Vorsprünge 68.1, 68.2 ein Klebstoff eingebracht ist. Dadurch wird der Maßstab 16 an dem vierten Befestigungselement 28 befestigt.

In Bezug auf Fig. 2 und 9 ist das vierte Befestigungselement 28 derart ausgebildet, dass es den Maßstab 16 an der dritten Position P3 um eine der dritten Position P3 zugeordnete Drehachse R3, die senkrecht zur Messteilungsebene 20 verläuft, frei drehbar gegenüber dem Zwischenträger 14 trägt. Ferner ist das vierte Befestigungselement 28 derart ausgebildet, dass es den Maßstab 16 an der dritten Position P3 in Querrichtung Y und in Höhenrichtung Z starr an dem Zwischenträger 14 trägt.

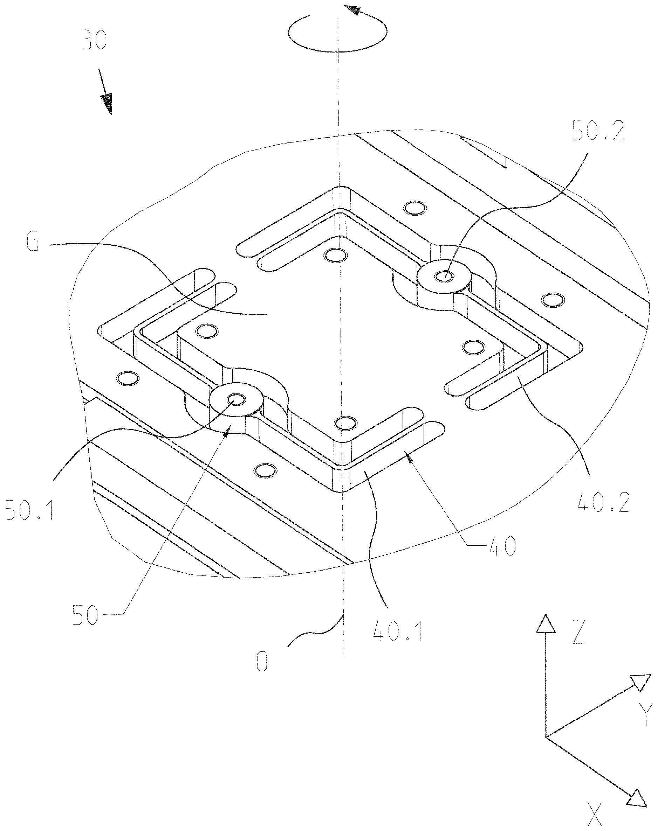

Fig. 10 zeigt eine perspektivische Ansicht des weiteren Befestigungselements 30. Das weitere Befestigungselement 30 umfasst zwei U-förmige Blattfedern 40.1, 40.2. Die Blattfedern 40.1, 40.2 sind relativ zu einer in Längsrichtung X verlaufenden Symmetrieachse symmetrisch zueinander angeordnet. Die beiden Blattfedern 40.1, 40.2 bilden zusammen ein Festkörpergelenk 40. Wie in Fig. 10 gezeigt, erstrecken sich die Blattfedern 40.1, 40.2 jeweils vom Grundkörper G des Hauptträgers 12 zu einem entsprechenden Befestigungsabschnitt 50 des weiteren Befestigungselements 30. Die Befestigungsabschnitte 50 umfassen jeweils eine Ausnehmung 50.1, 50.2 zur Aufnahme einer Befestigungsschraube. Die Ausnehmungen 50.1, 50.2 des weiteren Befestigungselements 30 sind den Ausnehmungen 60 des Zwischenträgers 14 zugeordnet. Dadurch kann der Zwischenträger 14 an dem weiteren Befestigungselement 30 befestigt werden.

In Bezug auf Fig. 2, 3 und 10 dienen die weiteren Befestigungselemente 30.1 bis 30.4 (zusätzlich zu der zuvor anhand von Fig. 3 erläuterten Funktion) zudem dazu, den Zwischenträger 14 an den weiteren Positionen Q1 bis Q4 um den weiteren Positionen Q1 bis Q4 zugeordnete Drehachsen, die jeweils senkrecht zur Messteilungsebene 20 verlaufen, frei drehbar gegenüber dem Hauptträger 12 zu tragen. In Fig. 10 ist lediglich eine dieser Drehachsen (Drehachse O) für das weitere Befestigungselement 30 beispielhaft dargestellt.

Wie in Fig. 10 lediglich für das weitere Befestigungselement 30 beispielhaft dargestellt, erstrecken sich die Blattfedern 40.1, 40.2 zumindest in Höhenrichtung Z, sodass keine Bewegung des Zwischenträgers 14 in Höhenrichtung Z zugelassen wird. In Bezug auf Fig. 2, 3 und 10 sind die weiteren Befestigungselemente 30.1 bis 30.4 somit derart ausgebildet, dass sie den Zwischenträger 14 an den weiteren Positionen Q1 bis Q4 in Höhenrichtung Z starr an dem Hauptträger 12 tragen.

Wie anhand von Fig. 6 bis 9 erläutert, dienen das erste bis vierte Befestigungselement 22 bis 28 nicht nur zur zweifachen Entkopplung des Maßstabs 16 vom Hauptträger 12 jeweils in einem Translationsfreiheitsgrad, d.h. Freiheitsgrad X, sondern auch in einem Rotationsfreiheitsgrad, d.h. Freiheitsgrad RZ. Die weiteren Befestigungselemente 30.1 bis 30.4 dienen zudem zur Entkopplung in allen sogenannten in-plane Freiheitsgraden, d.h. Freiheitsgrade X, Y und RZ (vgl. Fig. 10).

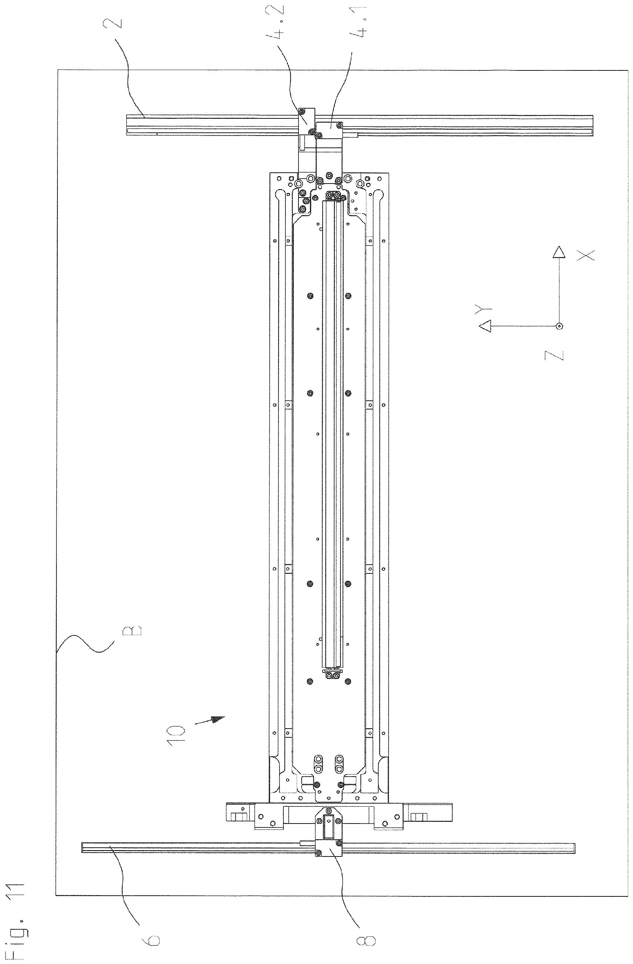

Fig. 11 zeigt eine Draufsicht auf eine Messanordnung zur Messung einer Position des Fixpunktes des Maßstabs 16 (Bezugspunkt) gegenüber einem ortsfesten Referenzteils B (z.B. Maschinenbett), die die Anordnung 10 nach Fig. 1 umfasst. Bei der in Fig. 11 gezeigten Messanordnung sind zwei weitere Maßstäbe 2, 6 vorgesehen, die an dem ortsfesten Referenzteil B befestigt sind. Die Anordnung 10 ist in Querrichtung Y verschiebbar gegenüber dem ortsfesten Referenzteil B gelagert. Der Maßstab 2 umfasst eine Messteilung zur Positionsbestimmung in Längsrichtung X sowie in Querrichtung Y, während der Maßstab 6 eine Messteilung zur Positionsbestimmung lediglich in Querrichtung Y umfasst. Die Messteilung des Maßstabs 2 ist durch zwei mit einem Ende der Anordnung 10 gekoppelten Abtastköpfen 4.1, 4.2 abtastbar. Die Messteilung des Maßstabs 6 ist durch einen mit dem anderen Ende der Anordnung 10 gekoppelten Abtastkopf 8 abtastbar. Durch die Verwendung der drei Abtastköpfe 4.1, 4.2, 8 wird es ermöglicht, die Position des Bezugspunktes (d.h. ortsfester Drehpunkt bzw. ortsfeste Drehachse R1, wobei ortsfest jeweils auf den Hauptträger 12 bezogen ist) gegenüber dem ortsfesten Referenzteil B zu ermitteln.

Hierzu kann durch die in Fig. 11 gezeigte Messanordnung die Lage der Anordnung 10 relativ zum ortsfesten Referenzteil B in den Freiheitsgraden X, Y und RZ bestimmt werden. In dieser Hinsicht wird Bezug genommen auf die Anmeldung DE 10 2008 010 284 A1, insbesondere das erste Ausführungsbeispiel, deren Inhalt hiermit in diese Anmeldung aufgenommen wird.

Der Maßstab 16 ist beispielsweise als sogenannter 1Dplus Encoder ausgebildet. Auch in dieser Hinsicht wird Bezug genommen auf die Anmeldung DE 10 2008 010 284 A1, insbesondere die Erläuterungen zu Fig. 2 bis 5.

Die Erfindung ist nicht auf das lichtelektrische Abtastprinzip beschränkt. Die Messteilung 18 kann insbesondere auch magnetisch oder induktiv abtastbar ausgebildet sein.

## Patentansprüche

1. Anordnung (10) mit einem Hauptträger (12), einem auf dem Hauptträger (12) angeordneten Zwischenträger (14) und einem auf dem Zwischenträger (14) angeordneten Maßstab (16), wobei sich der Maßstab (16) in einer Längsrichtung (X) erstreckt, und wobei der Maßstab (16) eine in einer Messteilungsebene (20) angeordnete Messteilung (18) zur Positionsmessung zumindest in Längsrichtung (X) aufweist,
wobei der Hauptträger (12) ein erstes Befestigungselement (22) und ein zweites Befestigungselement (24) aufweist, wobei das erste Befestigungselement (22) und das zweite Befestigungselement (24) in den Hauptträger (12) integriert sind, und wobei das erste Befestigungselement (22) und das zweite Befestigungselement (24) in Längsrichtung (X) voneinander beabstandet angeordnet sind,
wobei das erste Befestigungselement (22) derart ausgebildet ist, dass es den Zwischenträger (14) an einer ersten Position (P1) in Längsrichtung (X) starr an dem Hauptträger (12) trägt, und wobei das zweite Befestigungselement (24) derart ausgebildet ist, dass es den Zwischenträger (14) an einer von der ersten Position (P1) verschiedenen zweiten Position (P2) in Längsrichtung (X) frei beweglich gegenüber dem Hauptträger (12) trägt,
wobei die Anordnung (10) ein drittes Befestigungselement (26) und ein viertes Befestigungselement (28) aufweist, wobei das dritte Befestigungselement (26) und das vierte Befestigungselement (28) in Längsrichtung (X) voneinander beabstandet angeordnet sind, und
wobei das dritte Befestigungselement (26) derart ausgebildet ist, dass es den Maßstab (16) an der ersten Position (P1) in Längsrichtung (X) starr an dem Zwischenträger (14) trägt,
**dadurch gekennzeichnet, dass** das vierte Befestigungselement (28) derart ausgebildet ist, dass es den Maßstab (16) an einer von der ersten Position (P1) und der zweiten Position (P2) verschiedenen dritten Position (P3) in Längsrichtung (X) frei beweglich gegenüber dem Zwischenträger (14) trägt,
dass das erste Befestigungselement (22) derart ausgebildet ist, dass es den Zwischenträger (14) an der ersten Position (P1) um eine der ersten Position (P1) zugeordnete Drehachse (R1), die senkrecht zur Messteilungsebene (20) verläuft, frei drehbar gegenüber dem Hauptträger (12) trägt, und dass das zweite Befestigungselement (24) derart ausgebildet ist, dass es den Zwischenträger (14) an der zweiten Position (P2) um eine der zweiten Position (P2) zugeordnete Drehachse (R2), die senkrecht zur Messteilungsebene (20) verläuft, frei drehbar gegenüber dem Hauptträger (12) trägt.

2. Anordnung (10) nach Anspruch 1, wobei das erste Befestigungselement (22) und das zweite Befestigungselement (24) derart ausgebildet sind, dass sie den Zwischenträger (14) jeweils an der ersten Position (P1) beziehungsweise an der zweiten Position (P2) in einer Querrichtung (Y), die senkrecht zur Längsrichtung (X) verläuft, und in einer Höhenrichtung (Z), die senkrecht zur Messteilungsebene (20) verläuft, starr an dem Hauptträger (12) tragen.

3. Anordnung (10) nach Anspruch 1 oder 2, wobei das dritte Befestigungselement (26) derart ausgebildet ist, dass es den Maßstab (16) an der ersten Position (P1) um eine der ersten Position (P1) zugeordnete Drehachse (R1), die senkrecht zur Messteilungsebene (20) verläuft, frei drehbar gegenüber dem Zwischenträger (14) trägt, und wobei das vierte Befestigungselement (28) derart ausgebildet ist, dass es den Maßstab (16) an der dritten Position (P3) um eine der dritten Position (P3) zugeordnete Drehachse (R3), die senkrecht zur Messteilungsebene (20) verläuft, frei drehbar gegenüber dem Zwischenträger (14) trägt.

4. Anordnung (10) nach einem der Ansprüche 1 bis 3, wobei das dritte Befestigungselement (26) und das vierte Befestigungselement (28) derart ausgebildet sind, dass sie den Maßstab (16) jeweils an der ersten Position (P1) beziehungsweise an der dritten Position (P3) in einer Querrichtung (Y), die senkrecht zur Längsrichtung (X) verläuft, und in einer Höhenrichtung (Z), die senkrecht zur Messteilungsebene (20) verläuft, starr an dem Zwischenträger (14) tragen.

5. Anordnung (10) nach einem der Ansprüche 1 bis 4, wobei der Hauptträger (12) mehrere weitere Befestigungselemente (30.1 bis 30.4) aufweist, wobei die weiteren Befestigungselemente (30.1 bis 30.4) in den Hauptträger (12) integriert sind, und wobei die weiteren Befestigungselemente (30.1 bis 30.4) in Längsrichtung (X) verteilt zwischen dem ersten Befestigungselement (22) und dem zweiten Befestigungselement (24) angeordnet und derart ausgebildet sind, dass sie den Zwischenträger (14) an mehreren von der ersten Position (P1) und der zweiten Position (P2) verschiedenen weiteren Positionen (Q1 bis Q4) in Längsrichtung (X) und in einer Querrichtung (Y), die senkrecht zur Längsrichtung (X) verläuft, frei beweglich gegenüber dem Hauptträger (12) tragen.

6. Anordnung (10) nach Anspruch 5, wobei die weiteren Befestigungselemente (30.1 bis 30.4) derart ausgebildet sind, dass sie den Zwischenträger (14) an den weiteren Positionen (Q1 bis Q4) um den weiteren Positionen (Q1 bis Q4) zugeordnete Drehachsen, die jeweils senkrecht zur Messteilungsebene (20) verlaufen, frei drehbar gegenüber dem Hauptträger (12) tragen.

7. Anordnung (10) nach Anspruch 5 oder 6, wobei die weiteren Befestigungselemente (30.1 bis 30.4) derart ausgebildet sind, dass sie den Zwischenträger (14) an den weiteren Positionen (Q1 bis Q4) in einer Höhenrichtung (Z), die senkrecht zur Messteilungsebene (20) verläuft, starr an dem Hauptträger (12) tragen.

8. Anordnung (10) nach einem der Ansprüche 1 bis 7, wobei das erste Befestigungselement (22) und das zweite Befestigungselement (24) an einander gegenüberliegenden Enden des Hauptträgers (12) angeordnet sind.

9. Anordnung (10) nach einem der Ansprüche 1 bis 8, wobei der Maßstab (16) einen rechteckförmigen Querschnitt mit zwei einander gegenüberliegenden Seitenflächen (62, 64), die jeweils quer zur Längsrichtung (X) verlaufen, aufweist, wobei das dritte Befestigungselement (26) und das vierte Befestigungselement (28) auf dem Zwischenträger (14) angeordnet und derart ausgebildet sind, dass sie den Maßstab (16) an diesen einander gegenüberliegenden Seitenflächen (62, 64) kontaktieren.

10. Anordnung (10) nach einem der Ansprüche 1 bis 9, wobei das erste Befestigungselement (22), das zweite Befestigungselement (24), das dritte Befestigungselement (26) und/oder das vierte Befestigungselement (28) jeweils ein Festkörpergelenk (32 bis 38) aufweisen.

11. Anordnung (10) nach einem der Ansprüche 1 bis 10, wobei das erste Befestigungselement (22) und/oder das zweite Befestigungselement (24) jeweils mindestens zwei Blattfedern (32.1 bis 32.4; 34.1, 34.2) aufweisen, wobei sich jede Blattfeder (32.1 bis 32.4; 34.1, 34.2) in einer Höhenrichtung (Z), die senkrecht zur Messteilungsebene (20) verläuft, erstreckt.

12. Anordnung (10) nach einem der Ansprüche 1 bis 11, wobei der Hauptträger (12) und der Zwischenträger (14) einen gleichen thermischen Ausdehnungskoeffizienten haben.

13. Anordnung (10) nach einem der Ansprüche 1 bis 12, wobei der Zwischenträger (14) und der Maßstab (16) unterschiedliche thermische Ausdehnungskoeffizienten haben.

14. Anordnung (10) nach einem der Ansprüche 1 bis 13, wobei der Maßstab (16) aus einem Material mit einem thermischen Ausdehnungskoeffizienten im Temperaturbereich von 0° bis 50° kleiner als 1,5 x 10⁻⁶K⁻¹, vorzugsweise kleiner als 0,1 x 10⁻⁶K⁻¹, besteht.

## Claims

1. Arrangement (10) having a main carrier (12), an intermediate carrier (14) which is arranged on the main carrier (12) and a measuring rod (16) which is arranged on the intermediate carrier (14), wherein the measuring rod (16) extends in a longitudinal direction (X), and wherein the measuring rod (16) has a measurement division (18) which is arranged in a measurement division plane (20) for position measurement at least in the longitudinal direction (X),
wherein the main carrier (12) has a first securing element (22) and a second securing element (24), wherein the first securing element (22) and the second securing element (24) are integrated in the main carrier (12), and wherein the first securing element (22) and the second securing element (24) are arranged spaced apart from each other in the longitudinal direction (X),
wherein the first securing element (22) is constructed in such a manner that it carries the intermediate carrier (14) at a first position (P1) in the longitudinal direction (X) rigidly on the main carrier (12), and wherein the second securing element (24) is constructed in such a manner that it carries the intermediate carrier (14) at a second position (P2) which is different from the first position (P1) so as to be freely movable in the longitudinal direction (X) with respect to the main carrier (12),
wherein the arrangement (10) has a third securing element (26) and a fourth securing element (28), wherein the third securing element (26) and the fourth securing element (28) are arranged spaced apart from each other in the longitudinal direction (X), and
wherein the third securing element (26) is constructed in such a manner that it carries the measuring rod (16) at the first position (P1) in the longitudinal direction (X) in a rigid manner on the intermediate carrier (14),
**characterised in that** the fourth securing element (28) is constructed in such a manner that it carries the measuring rod (16) at a third position (P3) which is different from the first position (P1) and the second position (P2) so as to be freely movable in the longitudinal direction (X) with respect to the intermediate carrier (14),
**in that** the first securing element (22) is constructed in such a manner that it carries the intermediate carrier (14) at the first position (P1) about a rotation axis (R1) which is associated with the first position (P1) and which extends perpendicularly to the measurement division plane (20) so as to be able to be freely rotated with respect to the main carrier (12), and **in that** the second securing element (24) is constructed in such a manner that it carries the intermediate carrier (14) at the second position (P2) about a rotation axis (R2) which is associated with the second position (P2) and which extends perpendicularly to the measurement division plane (20) so as to be able to be freely rotated with respect to the main carrier (12).

2. Arrangement (10) according to Claim 1, wherein the first securing element (22) and the second securing element (24) are constructed in such a manner that they carry the intermediate carrier (14) in each case at the first position (P1) or at the second position (P2) in a transverse direction (Y) which extends perpendicularly to the longitudinal direction (X) and in a vertical direction (Z) which extends perpendicularly to the measurement division plane (20) in a rigid manner on the main carrier (12).

3. Arrangement (10) according to Claim 1 or 2, wherein the third securing element (26) is constructed in such a manner that it carries the measuring rod (16) at the first position (P1) about a rotation axis (R1) which is associated with the first position (P1) and which extends perpendicularly to the measurement division plane (20) so as to be freely rotatable with respect to the intermediate carrier (14), and wherein the fourth securing element (28) is constructed in such a manner that it carries the measuring rod (16) at the third position (P3) about a rotation axis (R3) which is associated with the third position (P3) and which extends perpendicularly to the measurement division plane (20) so as to be freely rotatable with respect to the intermediate carrier (14).

4. Arrangement (10) according to any one of Claims 1 to 3, where the third securing element (26) and the fourth securing element (28) are constructed in such a manner that they carry the measurement rod (16) in each case at the first position (P1) or at the third position (P3) in a transverse direction (Y) which extends perpendicularly to the longitudinal direction (X) and in a vertical direction (Z) which extends perpendicularly to the measurement division plane (20) in a rigid manner on the intermediate carrier (14).

5. Arrangement (10) according to any one of Claims 1 to 4, wherein the main carrier (14) has a plurality of additional securing elements (30.1 to 30.4), wherein the additional securing elements (30.1 to 30.4) are integrated in the main carrier (12), and wherein the additional securing elements (30.1 to 30.4) are arranged in a state distributed in the longitudinal direction (X) between the first securing element (22) and the second securing element (24) and are constructed in such a manner that they carry the intermediate carrier (14) at several additional positions (Q1 to Q4) which are different from the first position (P1) and the second position (P2) and the second position (P2) in the longitudinal direction (X) and in a transverse direction (Y) which extends perpendicularly to the longitudinal direction (X) so as to be freely movable with respect to the main carrier (12).

6. Arrangement (10) according to Claim 5, wherein the additional securing elements (30.1 to 30.4) are constructed in such a manner that they carry the intermediate carrier (14) at the additional positions (Q1 to Q4) about rotation axes which are associated with the additional positions (Q1 to Q4) and which extend perpendicularly to the measurement division plane (20) so as to be able to be freely rotated with respect to the main carrier (12).

7. Arrangement (10) according to Claim 5 or 6, wherein the additional securing elements (30.1 to 30.4) are constructed in such a manner that they carry the intermediate carrier (14) at the additional positions (Q1 to Q4) in a vertical direction (Z) which extends perpendicularly to the measurement division plane (20) in a rigid manner on the main carrier (12).

8. Arrangement (10) according to any one of Claims 1 to 7, wherein the first securing element (22) and the second securing element (24) are arranged at mutually opposing ends of the main carrier (12).

9. Arrangement (10) according to any one of Claims 1 to 8, wherein the measuring rod (16) has a rectangular cross section having two mutually opposing side faces (62, 64) which extend in each case transversely relative to the longitudinal direction (X), wherein the third securing element (26) and the fourth securing element (28) are arranged on the intermediate carrier (14) and are constructed in such a manner that they contact the measuring rod (16) at these mutually opposing side faces (62, 64).

10. Arrangement (10) according to any one of Claims 1 to 9, wherein the first securing element (22), the second securing element (24), the third securing element (26) and/or the fourth securing element (28) in each case have a flexure hinge (32 to 38).

11. Arrangement (10) according to any one of Claims 1 to 10, wherein the first securing element (22) and/or the second securing element (24) in each case have at least two leaf springs (32.1 to 32.4; 34.1, 34.2), wherein each leaf spring (32.1 to 32.4; 34.1, 34.2) extends in a vertical direction (Z) which extends perpendicularly to the measurement division plane (20).

12. Arrangement (10) according to any one of Claims 1 to 11, wherein the main carrier (12) and the intermediate carrier (14) have an identical thermal expansion coefficient.

13. Arrangement (10) according to any one of Claims 1 to 12, wherein the intermediate carrier (14) and the measuring rod (16) have different thermal expansion coefficients.

14. Arrangement (10) according to any one of Claims 1 to 13, wherein the measuring rod (16) comprises a material with a thermal expansion coefficient in the temperature range from 0° to 50° smaller than 1.5 x 10⁻⁶K⁻¹, preferably smaller than 0.1 x 10⁻⁶K⁻¹.

## Revendications

1. Agencement (10) muni d'un support principal (12), d'un support intermédiaire (14) agencé sur le support principal (12) et d'une échelle (16) agencée sur le support intermédiaire (14), l'échelle (16) s'étendant dans une direction longitudinale (X), et l'échelle (16) comprenant une graduation (18) agencée dans un plan de graduation (20) pour la mesure de position au moins dans la direction longitudinale (X),
le support principal (12) comprenant un premier élément de fixation (22) et un deuxième élément de fixation (24), le premier élément de fixation (22) et le deuxième élément de fixation (24) étant intégrés dans le support principal (12), et le premier élément de fixation (22) et le deuxième élément de fixation (24) étant agencés à distance l'un de l'autre dans la direction longitudinale (X),
le premier élément de fixation (22) étant configuré de telle sorte qu'il supporte le support intermédiaire (14) à une première position (P1) dans la direction longitudinale (X) de manière rigide sur le support principal (12), et le deuxième élément de fixation (24) étant configuré de telle sorte qu'il supporte le support intermédiaire (14) à une deuxième position (P2) dans la direction longitudinale (X) différente de la première position (P1) de manière librement mobile par rapport au support principal (12),
l'agencement (10) comprenant un troisième élément de fixation (26) et un quatrième élément de fixation (28), le troisième élément de fixation (26) et le quatrième élément de fixation (28) étant agencés à distance l'un de l'autre dans la direction longitudinale (X), et
le troisième élément de fixation (26) étant configuré de telle sorte qu'il supporte l'échelle (16) à la première position (P1) dans la direction longitudinale (X) de manière rigide sur le support intermédiaire (14),
**caractérisé en ce que** le quatrième élément de fixation (28) est configuré de telle sorte qu'il supporte l'échelle (16) à une troisième position (P3) dans la direction longitudinale (X) différente de la première position (P1) et de la deuxième position (P2) de manière librement mobile par rapport au support intermédiaire (14),
**en ce que** le premier élément de fixation (22) est configuré de telle sorte qu'il supporte le support intermédiaire (14) à la première position (P1) de manière librement rotative par rapport au support principal (12) autour d'un axe de rotation (R1) associé à la première position (P1), qui est perpendiculaire au plan de graduation (20), et **en ce que** le deuxième élément de fixation (24) est configuré de telle sorte qu'il supporte le support intermédiaire (14) à la deuxième position (P2) de manière librement rotative par rapport au support principal (12) autour d'un axe de rotation (R2) associé à la deuxième position (P2), qui est perpendiculaire au plan de graduation (20).

2. Agencement (10) selon la revendication 1, dans lequel le premier élément de fixation (22) et le deuxième élément de fixation (24) sont configurés de telle sorte qu'ils supportent le support intermédiaire (14) respectivement à la première position (P1) et à la deuxième position (P2) dans une direction transversale (Y), qui est perpendiculaire à la direction longitudinale (X), et dans une direction verticale (Z), qui est perpendiculaire au plan de graduation (20), de manière rigide sur le support principal (12).

3. Agencement (10) selon la revendication 1 ou 2, dans lequel le troisième élément de fixation (26) est configuré de telle sorte qu'il supporte l'échelle (16) à la première position (P1) de manière librement rotative par rapport au support intermédiaire (14) autour d'un axe de rotation (R1) associé à la première position (P1), qui est perpendiculaire au plan de graduation (20), et dans lequel le quatrième élément de fixation (28) est configuré de telle sorte qu'il supporte l'échelle (16) à la troisième position (P3) de manière librement rotative par rapport au support intermédiaire (14) autour d'un axe de rotation (R3) associé à la troisième position (P3), qui est perpendiculaire au plan de graduation (20).

4. Agencement (10) selon l'une quelconque des revendications 1 à 3, dans lequel le troisième élément de fixation (26) et le quatrième élément de fixation (28) sont configurés de telle sorte qu'ils supportent l'échelle (16) respectivement à la première position (P1) et à la troisième position (P3) dans une direction transversale (Y), qui est perpendiculaire à la direction longitudinale (X), et dans une direction verticale (Z), qui est perpendiculaire au plan de graduation (20), de manière rigide sur le support intermédiaire (14).

5. Agencement (10) selon l'une quelconque des revendications 1 à 4, dans lequel le support principal (12) comprend plusieurs éléments de fixation supplémentaires (30.1 à 30.4), dans lequel les éléments de fixation supplémentaires (30.1 à 30.4) sont intégrés dans le support principal (12), et dans lequel les éléments de fixation supplémentaires (30.1 à 30.4) sont agencés dans la direction longitudinale (X) de manière répartie entre le premier élément de fixation (22) et le deuxième élément de fixation (24) et sont configurés de telle sorte qu'ils supportent le support intermédiaire (14) à plusieurs positions supplémentaires (Q1 à Q4) différentes de la première position (P1) et de la deuxième position (P2) dans la direction longitudinale (X) et dans une direction transversale (Y), qui est perpendiculaire à la direction longitudinale (X), de manière librement mobile par rapport au support principal (12).

6. Agencement (10) selon la revendication 5, dans lequel les éléments de fixation supplémentaires (30.1 à 30.4) sont configurés de telle sorte qu'ils supportent le support intermédiaire (14) aux positions supplémentaires (Q1 à Q4) de manière librement rotative par rapport au support principal (12) autour d'axes de rotation associés aux positions supplémentaires (Q1 à Q4), qui sont respectivement perpendiculaires au plan de graduation (20).

7. Agencement (10) selon la revendication 5 ou 6, dans lequel les éléments de fixation supplémentaires (30.1 à 30.4) sont configurés de telle sorte qu'ils supportent le support intermédiaire (14) aux positions supplémentaires (Q1 à Q4) dans une direction verticale (Z), qui est perpendiculaire au plan de graduation (20), de manière rigide sur le support principal (12).

8. Agencement (10) selon l'une quelconque des revendications 1 à 7, dans lequel le premier élément de fixation (22) et le deuxième élément de fixation (24) sont agencés à des extrémités opposées l'une à l'autre du support principal (12).

9. Agencement (10) selon l'une quelconque des revendications 1 à 8, dans lequel l'échelle (16) présente une section transversale de forme rectangulaire munie de deux surfaces latérales (62, 64) opposées l'une à l'autre, qui sont respectivement perpendiculaires à la direction longitudinale (X), dans lequel le troisième élément de fixation (26) et le quatrième élément de fixation (28) sont agencés sur le support intermédiaire (14) et sont configurés de telle sorte qu'ils viennent en contact avec l'échelle (16) au niveau de ces surfaces latérales (62, 64) opposées l'une à l'autre.

10. Agencement (10) selon l'une quelconque des revendications 1 à 9, dans lequel le premier élément de fixation (22), le deuxième élément de fixation (24), le troisième élément de fixation (26) et/ou le quatrième élément de fixation (28) comprennent respectivement une articulation à corps solide (32 à 38).

11. Agencement (10) selon l'une quelconque des revendications 1 à 10, dans lequel le premier élément de fixation (22) et/ou le deuxième élément de fixation (24) comprennent respectivement au moins deux ressorts à lame (32.1 à 32.4 ; 34.1, 34.2), dans lequel chaque ressort à lame (32.1 à 32.4 ; 34.1, 34.2) s'étend dans une direction verticale (Z), qui est perpendiculaire au plan de graduation (20).

12. Agencement (10) selon l'une quelconque des revendications 1 à 11, dans lequel le support principal (12) et le support intermédiaire (14) ont un coefficient de dilation thermique identique.

13. Agencement (10) selon l'une quelconque des revendications 1 à 12, dans lequel le support intermédiaire (14) et l'échelle (16) ont des coefficients de dilatation thermique différents.

14. Agencement (10) selon l'une quelconque des revendications 1 à 13, dans lequel l'échelle (16) est constituée d'un matériau ayant un coefficient de dilatation thermique dans la plage de température allant de 0° à 50° inférieur à 1,5 x 10⁻⁶K⁻¹, de préférence inférieur à 0,1 x 10⁻⁶_{K}-¹.
